# EUROPEAN PATENT APPLICATION

(11) **EP 1 159 908 A2**
(43) Date of publication of application: **05.12.2001**
(21) Application number: 00830499.0
(22) Date of filing: 17.07.2000
(51) Int. Cl.: A47J 43/22

(54) **A tool for food flouring**

(30) Priority: 18.05.2000 IT AN200015
(71) Applicant: Bellucci, Emanuele, 60100 Ancona (IT); Alunni Bistocchi, Emanuela, 62100 Macerata (IT)
(72) Inventor: Bellucci, Emanuele, 60100 Ancona (IT); Alunni Bistocchi, Emanuela, 62100 Macerata (IT)
(74) Representative: Baldi, Claudio

(57) **Abstract**

The present invention concerns a tool for food flouring made up of a rectangular box with airtight lid, internally provided with a horizontal grid that covers the entire box section at a certain height from the bottom.

## Description

The present patent application for industrial invention concerns a tool for food flouring.

As it is known, some foods need to be floured before cooking, especially when fried in oil. This is true not only for cakes, but also for meat or fish dishes.

The flouring operation is currently carried out manually, that is without the aid of specific devices. Most of the times, some flour is placed on a working surface and then the food is repeatedly immersed in the flour, turning it over on all sides, until the flouring operation is conveniently completed.

Although effective, this elementary technique is impaired by evident disadvantages resulting from the unavoidable uncontrolled dispersion of flour around the area used for the operation, the precarious hygienic conditions and the slowness and cumbersomess of the operation.

The last disadvantage is particularly penalising in the case of community kitchens (such as restaurants, canteens, rotisseries or bakeries), where large quantities of food need to be floured.

The tool according to the present invention has been conceived in order to carry out flouring in a fast, effective and hygienic way.

The said tool basically consists in a parallelepiped box with airtight covering lid, which internally supports a horizontal grid positioned at a certain height from the bottom of the box.

As regards the use of the tool, first a certain quantity of flour is positioned on the entire surface of the box bottom (that is in the space underneath the grid). Then the food to be floured is placed on the grid and a first layer of flour is scattered on its upward surface.

Now the box is closed with the airtight lid, held with both hands and repeatedly rotated around its longitudinal axis to pour the flour in a continuous alternate way from the space underneath the grid to the space above it (through the holes located on the grid). All sides of the food are unavoidably covered with flour, because the food is continuously shaken and turned over inside the space comprised between the grid and the horizontal wall of the covering lid.

The advantages of the tool according to the present invention appear evident from this brief description: first of all the possibility of simultaneously flouring all the food contained in the box in a fast, complete way.

Another significant advantage is represented by the fact that the entire flouring operation is carried out inside an airtight container, with considerable improvement in terms of hygienic conditions (especially due to the fact that the operator no longer needs to touch the food). At the same time, the flour used for this operation remains inside the box, is not scattered in an uncontrolled way and does not require the long, tiresome collection operation at the end of the flour procedure.

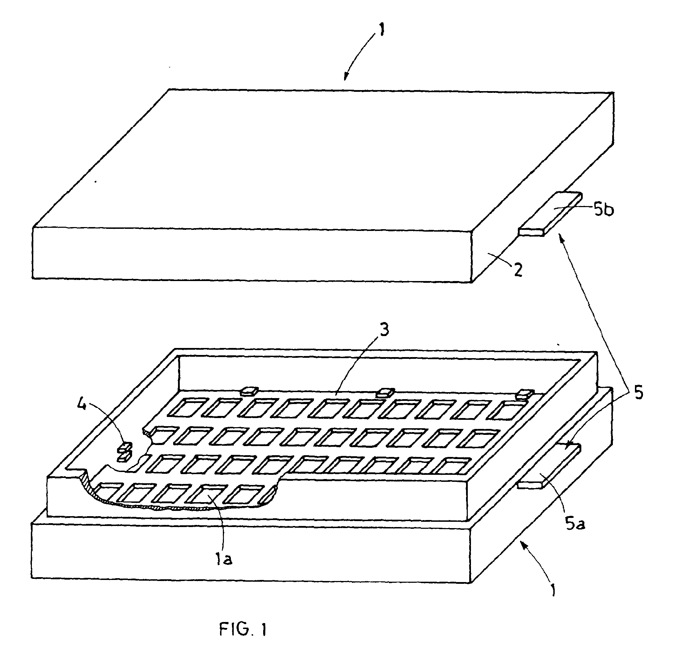

For major clarity the description of the present invention continues with reference to the enclosed drawing, which is intended for purposes of illustration and not in a limiting sense, whereby Fig. 1 is an axonometric view of the tool according to the present invention.

With reference to this figure, the tool according to the present invention consists in a rectangular box (1) provided with an airtight lid (2).

The box (1) is internally provided with a horizontal grid (3) that covers the entire section of the box (1) at a certain height from the bottom (1a).

The grid (3) is supported and held in place by pairs of teeth (4), all of them positioned at the same height from the bottom (1a) on the internal walls of the box (1).

The flexural elasticity of the grid (3) allows for engaging its edges with the pairs of teeth, as well as for easily disengaging them in order to disassemble the grid and accurately wash the inside of the box (1).

Finally, attention is drawn onto the double handle (5) of the tool according to the present invention. The external sides of the transversal walls of the box (1) feature an opposed pair of longitudinal elements (5a), while the external sides of the lid (2) feature an opposed pair of longitudinal elements (5b) capable of perfectly matching the longitudinal elements (5a) when the box (1) is closed with the lid (2).

This allows the operator to easily turn the box over, by holding it with the double handle (5), which does not require specific means to fix the lid (2) to the box (1). It is understood that numerous constructive versions of the tool shown in the enclosed figure can be devised without leaving the scope of the present invention, such as different means to hold the grid (3) in place, different shape of the box (1), different profile of the holes of the grid (3), different means to fix the lid (2) to the box (1).

## Claims

1. A tool for food flouring, **characterised in that** it comprises a rectangular box (1) with airtight lid (2), internally provided with a horizontal grid (3) that covers the entire box section at a certain height from the bottom.

2. A tool according to claim 1, **characterised in that** the grid (3) is supported and held in place inside the box (1) by means of pairs of teeth (4), all of them positioned at the same height from the bottom (1a) on the internal walls of the box(1).

3. A tool according to claim 1, **characterised in that** the external sides of the transversal walls of the box (1) feature an opposed pair of longitudinal elements (5a) located in corresponding position with respect to an opposed pair of longitudinal elements (5b) positioned on the external sides of the lid (2); it being provided that the two pairs of longitudinal elements (5a and 5b) match when the box (1) is closed with the lid (2).
